# EUROPÄISCHE PATENTSCHRIFT

(11) **EP 2 255 099 B1**
(45) Veröffentlichungstag und Bekanntmachung des Hinweises auf die Patenterteilung: **24.09.2014**
(21) Anmeldenummer: 09721307.8
(22) Anmeldetag: 07.03.2009
(51) Int. Cl.: F16D 3/226, F16D 3/84

(54) **DICHTUNGSANORDNUNG FÜR GLEICHLAUFGELENKE**
SEALING ARRANGEMENT FOR CONSTANT VELOCITY JOINTS
AGENCEMENT D'ÉTANCHÉITÉ POUR UN JOINT HOMOCINÉTIQUE

(30) Priorität: 19.03.2008 DE 102008015006
(43) Veröffentlichungstag der Anmeldung: 01.12.2010
(73) Patentinhaber: IFA-Technologies GmbH, 39340 Haldensleben (DE)
(72) Erfinder: FROST, Sebastian, 39108 Magdeburg (DE); LANGER, Gerald, 39345 Bülstringen (DE)
(74) Vertreter: Herzog, Günter
(86) Internationale Anmeldenummer: PCT/DE2009/000321
(87) Internationale Veröffentlichungsnummer: WO 2009/115074

(56) Entgegenhaltungen:
- DE-A1-102005 029 754
- DE-C1- 19 652 100
- FR-A- 2 311 668
- FR-A- 2 745 234
- GB-A- 2 191 268
- US-B1- 7 297 067

## Beschreibung

Die Erfindung betrifft eine Dichtungsanordnung zum Abdichten des Außenteiles eines Gleichlaufgelenkes zu einem Rohr oder zu einer Welle, welche mit dem Außenteil des Gleichlaufgelenkes verbunden sind.

Die Gleichlaufgelenke sind mit einer Innennabe und einer Außennabe ausgebildet, in denen jeweils mehrere, einander paarweise zugeordnete Laufbahnen vorgesehen sind, in welchen in einem Käfig geführte Kugeln zur Übertragung von Drehmomenten zwischen der Innennabe und der Außennabe aufgenommen sind und eine Abdichtung nach außen erfolgt. Derartige Gleichlaufgelenke werden beispielsweise in Längs- oder Seitenwellen von Kraftfahrzeugen eingesetzt und diese werden mit einem Schmiermittel versehen, welches ein gutes Verhalten der Gleichlaufgelenke mit Bezug auf Reibung und Verschleiß sicherstellt.
Zur Verhinderung des Austretens des Schmiermittels aus dem Gelenk und zur Verhinderung des Eindringens von Schmutzpartikeln oder ähnlichen Fremdkörpern, werden diese Gelenke abgedichtet.
Dies erfolgt bekannterweise über Elastomerteile/Kappen und Verschlussdeckel, wobei die Gelenkaußenteile gegenüber dem Wellenschaft mit Falten- oder Rollbälgen und an ihren äußeren Flanschflächen mit Blechdeckeln abgedichtet sind. Zur Abdichtung sind zwischen den aufeinander liegenden metallischen Flächen elastische Dichtelemente vorgesehen, da die metallischen Flächen aufgrund von ungenau bearbeiteten Oberflächen ein Austreten des Schmiermittels während des Betriebes nicht sicher verhindern können, allerdings die eingesetzten Dichtelemente einem erhöhten Verschleiß unterliegen.

Aus der DE 198 57 460 C 2 ist eine Dichtungsanordnung an einem Gleichlaufdrehgelenk bekannt, welches ein Gelenkaußenteil mit zumindest einer Öffnung an einem axialen Ende, ein in dieses eingesetzte Gelenkinnenteil mit damit verbundener Antriebswelle und zwischen Gelenkaußenteil und Gelenkinnenteil wirksame der Drehmomentübertragung dienende Rollkörper umfasst, wobei zumindest ein Blechelement mit einer Ringfläche auf einer Stirnfläche des Gelenkaußenteiles aufliegt und Gelenkaußenteil und Blechelement miteinander verspannt sind und eine erste Fläche - rechte Ringfläche oder Stirnfläche - eine Oberflächenstruktur mit Erhebungen und Vertiefungen aufweist und die jeweils andere Fläche - Ringfläche oder Stirnfläche - eine ebene Gegenfläche bildet. Dabei ist das plastisch-elastische Dichtmittel zwischen der Ringfläche und der Stirnfläche eingebracht und wird in den Erhebungen der ebenen Gegenflächen in den Zwischenräumen der Oberflächenstruktur eingeformt.

Eine Abdichtungsanordnung für ein Gleichlaufdrehgelenk mit einem Gelenkinnenteil, das mit einem Wellenschaft verbunden ist und einem Gelenkaußenteil, das gegenüber diesem mit einem Faltenbalg abgedichtet ist und mit einem Verschlussdeckel am Gelenkaußenteil, der mit einem Randbereich zwischen Gelenkaußenteil und Gegenflansch eingespannt ist, beschreibt die DE 197 36 546 C 2, bei dem der Verschlussdeckel mit dem Gelenkaußenteil durch eine aus einem Abdichtmittel bestehende Kleberschicht verbunden ist, welche abdichtend gegenüber der Flanschfläche und gegenüber dem Verschlussdeckel wirken soll.

Das Abdichten von Gleichlaufgelenken ist mit Voraussetzung für die Betriebssicherheit und für die Funktion des jeweiligen Gleichlaufgelenkes. Unter Beachtung dieser Bedingungen gibt es verschiedene Lösungsvorschläge. So beschreibt die DE 24 19 236 A ein Gleichlaufgelenk, welches auf einer Seite mittels eines Abdeckteiles abgedichtet ist, wobei dieses Abdeckteil zwischen einer Welle und dem Außenring des Gleichlaufgelenkes verbunden ist. Auf der gegenüberliegenden Seite erfolgt die Abdichtung des Gleichlaufgelenkes mittels eines Gummibalges.
Eine Gelenkanordnung mit Dichtmitteln ist mit der DE 10 2006 006 441 A 1 bekannt geworden, welche aus einem Deckel und einem Membranteil gebildet ist. Der Deckel ist auf einer Seite und auf der gegenüberliegenden Seite ist das Membranteil angeordnet, welche jeweils mit dem Außenteil des Gleichlaufgelenkes und den nachfolgenden Bauelementen verbunden sind.

Ein Gleichlaufdrehgelenk für eine Längsantriebswelle mit optimiertem Crashverhalten ist in der DE 196 52 100 C 1 beschrieben. Dieses Gleichlaufdrehgelenk ist gleichfalls links- und rechtsseitig gegen äußere Einflüsse abgedichtet, einerseits über einen bekannten Rollbalg und andererseits über einen Deckel, der in einer Rohrwelle vorgesehen ist. Dieser Deckel ist vorrangig deshalb angeordnet, um in einem Crashfall das Teleskopieren bzw. ungestörte Teleskopieren der einzelnen Teile zu gewährleisten und in diesem Zusammenhang auch gewisse Abdichtfunktionen übernimmt.

Ein Gleichlaufgelenk dieser Gattung beschreibt die DE 43 44 177 C 1, deren geometrischen Abmessungen der einzelnen Funktionsteile so aufeinander abgestimmt sind, dass der Innendurchmesser des Gelenkaußenteiles oder der anschließenden Rohrwelle im Anschluss an den vom Gelenkinnenteil im Betrieb bei Schiebebewegungen eingenommenen Freiraum in Richtung zur Rohrwelle hin kleiner ist als der Außendurchmesser des Gelenkinnenteiles. Somit soll ein ungestörtes Teleskopieren der einzelnen Bauteile des Gleichlaufgelenkes in einem Crashfall ermöglicht werden. Eine Abdichtung des Gleichlaufgelenkes in Richtung der Rohrwelle erfolgt über einen in der Rohrwelle angeordneten Deckel und auf der gegenüberliegenden Seite über einen vorgesehenen Rollbalg.

Eine weitere Lösung, welche sich auf ein Dichtelement und eine Dichtungsanordnung an einem Gleichlaufdrehgelenk bezieht, ist mit der DE 101 20 884 A 1 bekannt geworden, bei dem das Dichtelement aus einer Ringscheibe mit im Wesentlichen ebenen beiderseitigen Stirnflächen besteht, die jeweils zumindest eine umlaufende Nut aufweisen, in denen jeweils ein Dichtring aus dauerelastischer Dichtmasse einliegt und dauerhaft befestigt ist. Es wird ferner ausgeführt, dass die vorgestellte Lösung weiterhin in einer Dichtungsanordnung mit einem ringscheibenförmigen Dichtelement besteht, das zwischen dem Deckel und dem Außenteil angeordnet ist, aus einer Ringscheibe mit im Wesentlichen ebenen beiderseitigen Stirnflächen, die jeweils zumindest eine umlaufende Nut aufweisen, in denen jeweils ein Dichtring aus dauerelastischer Dichtmasse einliegt und befestigt ist.

Ferner wird die US 7,297,067 B 1 benannt, in der die Verbindung eines Gleichlaufgelenkes mit einem Rohr beschrieben wird, welche als Schweißverbindung ausgeführt ist. Im Inneren des Außenrings vom Gleichlaufgelenk ist ein Deckel angeordnet, welcher das Gleichlaufgelenk abdichtet und während des Schweißens durch sich herausbildende Schweißwülste zum Gleichlaufgelenk verbunden wird.

Nachteilig bei diesen Lösungen ist, dass zur Befestigung des Blechdeckels und zum Abdichten des Gleichlaufdrehgelenkes zusätzlich elastische Dichtelemente/Dichtmaterialien verwendet werden, um die Dichtheit des Gleichlaufgelenkes zu erreichen. Der Nachteil liegt insbesondere darin begründet, dass eingesetzte elastische Dichtelemente und verwendete Kleber nach einer bestimmten Zeit aushärten und porös werden, so dass nicht verhindert wird, dass aus dem Inneren des Gleichlaufdrehgelenkes Schmiermittel nach außen austritt und im Gegenzug unerwünschte Fremdteile in das Innere des Gleichlaufdrehgelenkes gelangen können.
Ferner ist nachteilig, dass es beim Verschweißen eines Rohres oder einer Welle zum Außenteil des Gleichlaufdrehgelenkes zu erhöhten Temperaturen kommt, die sich gleichfalls negativ auf die dichtenden Eigenschaften der zum Einsatz gekommenen Kleber bzw. Dichtelemente auswirken.

Hiervon ausgehend ist es Aufgabe der vorliegenden Erfindung, eine Dichtungsanordnung der genannten Art bereitzustellen, mit der eine Abdichtung von Gleichlaufgelenken in allen Betriebszuständen erzielt wird, welche gleichfalls kostengünstig herstellbar ist.

Erfindungsgemäß wird diese Aufgabe mit den Merkmalen des Anspruches 1 gelöst.

Besondere Ausgestaltungen und vorteilhafte Lösungen sind in den Unteransprüchen angegeben.

So besteht die Lösung nach der vorliegenden Erfindung aus einer Dichtungsanordnung mit einem Dichtelement, welches als ein Verschlussdeckel ausgebildet ist, welcher eine gestülpte Form besitzt und dessen äußerer Durchmesser gestuft ausgebildet ist. Diese gestufte Ausbildung des äußeren Durchmessers/Umfangs des Verschlussdeckels wird herausgebildet durch einen Pressansatz und ein abgesetztes Teilstück, so dass der äußere Durchmesser/der Umfang vom Verschlussdeckel mit zwei unterschiedlichen Durchmessern ausgebildet ist. Der Pressansatz ist mit dem größeren und das abgesetzte Teilstück mit dem kleineren Durchmessermaß ausgeführt.
Der Verschlussdeckel ist über den Pressansatz im Gelenkaußenteil eingepresst, somit sowohl form- als auch kraftschlüssig mit diesem verbunden.
Der Kraftschluss und somit auch die feste Verbindung zwischen dem Dichtelement und dem Gelenkaußenteil wird zusätzlich dadurch erreicht, und somit auch eine erhöhte Festigkeit der Verbindung zwischen Verschlussdeckel und Gelenkaußenteil gesichert, dass während eines Schweißvorganges, dem Verbinden des Gleichlaufgelenkes mit einem zum Gelenkaußenteil anzuschweißenden Rohr oder einer Welle bzw. einer Hohlwelle, gleichfalls eine festigkeitsmäßige Erhöhung der kraftschlüssigen Verbindung vom Gelenkaußenteil zum Verschlussdeckel erzielt wird.

Unter Beachtung dessen, dass bei einem Crashfall die Drehmoment übertragenden Funktionsteile, die der Längswellen und die der eingesetzten Gelenke, zueinander teleskopieren sollen, um größere Zerstörungen am jeweiligen Kraftfahrzeug, aber insbesondere zur Verhinderung von Verletzungen für die im jeweiligen Kraftfahrzeug befindlichen Personen zu verhindern, ist in einer weiteren Ausgestaltung der Erfindung vorgesehen, dass der Verschlussdeckel des einzusetzenden Dichtelementes mit so genannten Sollbruchstellen ausgebildet ist.

Diese Sollbruchstellen sind im Übergangsbereich vom äußeren Durchmesser zur gestülpten Form des Verschlussdeckels vorgesehen.
Bei dieser Ausführung des Verschlussdeckels ist dieser an seinem äußeren Umfang gleichfalls mit einem Pressansatz und einem abgesetzten Teilstück ausgebildet und besitzt zusätzlich eine umlaufende Nut am äußeren Umfang des abgesetzten Teilstückes.

Diese Verbindung des Gleichlaufgelenkes zu einem Rohr oder einer Welle/Hohlwelle erfolgt über eine Schweißverbindung des stirnseitig zum Gelenkaußenteil des Gleichlaufgelenkes anliegenden Rohres bzw. einer Welle oder auch einer Hohlwelle. Die Berührungsflächen bilden die Schweißfläche und als Schweißverfahren kommt ein Reibschweißen oder Magnetarcschweißen zur Anwendung. Die Wahl und die Festlegung der Schweißfläche, der Verbindungsstelle von Rohr/Hohlwelle/Welle zum Gelenkaußenteil des Gleichlaufgelenkes, erfolgt unter Beachtung der geometrischen Abmaße dieser Teile und der Ausbildung und des Einsatzes des Verschlussdeckels im Gelenkaußenteil.
Dies erfolgt derart, dass sich die Schweißstelle im Bereich des abgesetzten Teilstückes des Verschlussdeckels befindet, somit zwischen dem äußeren Umfang des abgesetzten Teilstückes und dem Innendurchmesser des Gelenkaußenteiles und in diesem Bereich ein Luftspalt vorhanden ist.
Während des Reibschweißens werden das Gelenkaußenteil und das anzuschweißende Rohr bzw. die anzuschweißende Hohlwelle in ihrer gemeinsamen Schweißfläche verbunden, gleichfalls entstehen Sekundärschweißnähte in Form von sich ausbildenden Schweißwülsten, die sich am äußeren Umfang vom Gelenkaußenteil und Rohr/Hohlwelle sowie am Luftspalt zwischen Gelenkaußenteil/Rohr/Hohlwelle und am abgesetzten Teil des Verschlussdeckels herausbilden, somit infolge der sich herausbildenden Sekundärschweißnähte eine zusätzliche Verbindung und Befestigung des Verschlussdeckels zum Gelenkaußenteil des Gleichlaufgelenkes erzielt wird.

Bei Einsatz eines Verschlussdeckels mit einer im abgesetzten Teilstück ausgebildeten, umlaufenden Nut, diese befindet sich unmittelbar unterhalb der Schweißnahtfläche vom Gelenkaußenteil zum anzuschweißenden Rohr bzw. anzuschweißender Hohlwelle, wird erreicht, dass sich beim Schweißvorgang die untere Sekundärschweißnaht über den vorhandenen Luftspalt hinaus in der umlaufenden Nut des Verschlussdeckels ausbilden kann, somit die untere Schweißwulst formschlüssig an den Seitenflächen der Nut anliegt und die festigkeitsmäßige Verbindung des Verschlussdeckels zum Gelenkaußenteil erhöht wird, aber, unter Berücksichtung eines Crashfalles, der Verschlussdeckel zerstört wird, so dass die Teile vom Gelenkinnenteil des Gleichlaufgelenkes und das im Gelenkinnenteil angeordnete Wellenstück in Richtung des Rohrinnenraumes vom angeschweißten Rohr/Hohlwelle teleskopieren können.

Ein weiterer Vorteil der vorgestellten Lösung liegt darin, dass durch die Ausbildung des Dichtelementes und dessen Anordnung im Gelenkaußenteil eines Gleichlaufgelenkes dieses nach außen hin abgedichtet wird, ohne dass das im Inneren des Gleichlaufgelenkes befindliche Schmiermittel aus diesem austreten kann, so über die Schweißung vom Gelenkaußenteil und dem anzuschließenden Rohr bzw. der anzuschließenden Hohlwelle eine schweißtechnische Verbindung als auch zwischen dem Gelenkaußenteil und dem im Gelenkaußenteil eingesetzten, als Verschlussdeckel ausgebildeten Dichtelement gewährleistet ist.

Die Erfindung soll mit nachfolgendem Ausführungsbeispiel näher erläutert werden.
Die dazugehörige Zeichnung zeigt in
- Figur 1:: eine Schnittdarstellung eines Gleichlaufgelenkes mit zugeordnetem Rollbalg und einem auf der gegenüberliegenden Seite des Gleichlaufgelenkes vorgesehenen, als ein Verschlussdeckel ausgebildeten Dichtelement,
- Figur 2:: eine Einzelheit A nach Figur 1,
- Figur 3:: eine weitere Ausbildung eines Verschlussdeckels als Einzelheit B nach Figur 1.

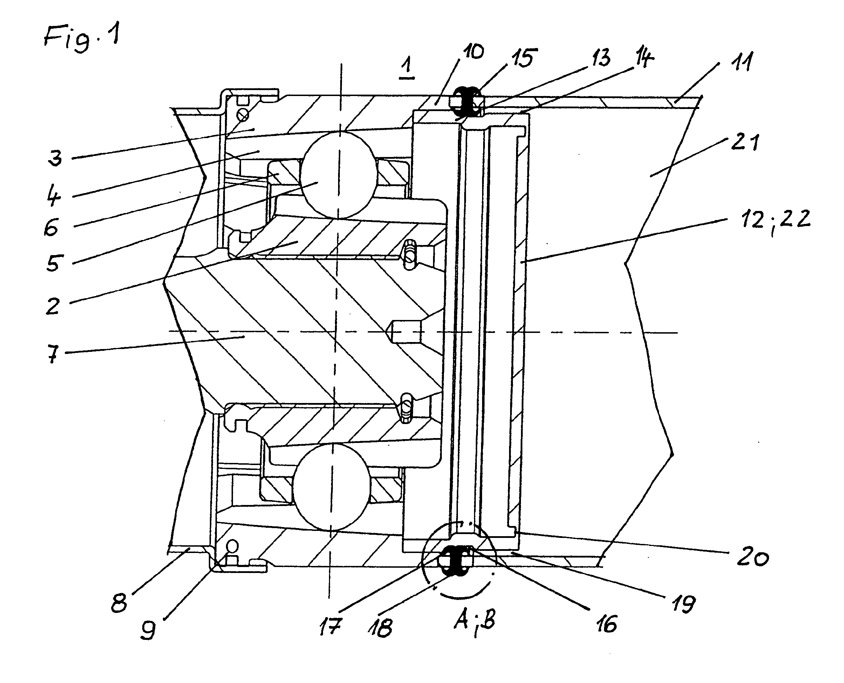

In der Darstellung nach der Figur 1 ist ein Gleichlaufgelenk 1 gezeigt, welches gebildet wird aus dem Gelenkinnenteil 2 und dem Gelenkaußenteil 3, in denen Laufbahnen 4 vorgesehen sind. In den Laufbahnen 4 sind die Kugeln 5 führend in einem Käfig 6 angeordnet, mittels denen Drehmomente durch das Gleichlaufgelenk 1 übertragen werden können.
Über einen im Gelenkinnenteil 2 vorgesehenen Wellenzapfen 7 ist das Gleichlaufgelenk 1 zu einem nicht näher dargestellten Antriebsstrang verbunden.

Die linksseitige Abdichtung des Gleichlaufgelenkes 1 erfolgt über einen Rollbalg 8, der zum einen mit dem Gelenkaußenteil 3 und zum anderen mit dem Wellenzapfen 7 verbunden ist.
Ein zwischen dem Rollbalg 8 und dem Gelenkaußenteil 3 vorgesehener Gummiring 9, beispielsweise ein Nullring, wirkt zusätzlich dichtend.

Rechtsseitig ist das Gleichlaufgelenk 1 zum Rohrinnenraum 21 eines mit dem Gelenkaußenteil 3 verbundenen Rohres 11 mittels eines Verschlussdeckels 12; 22 abgedichtet, welcher in zylindrischer Ausführung ausgebildet ist, wobei dieser auch eine gestülpte Form besitzen kann.

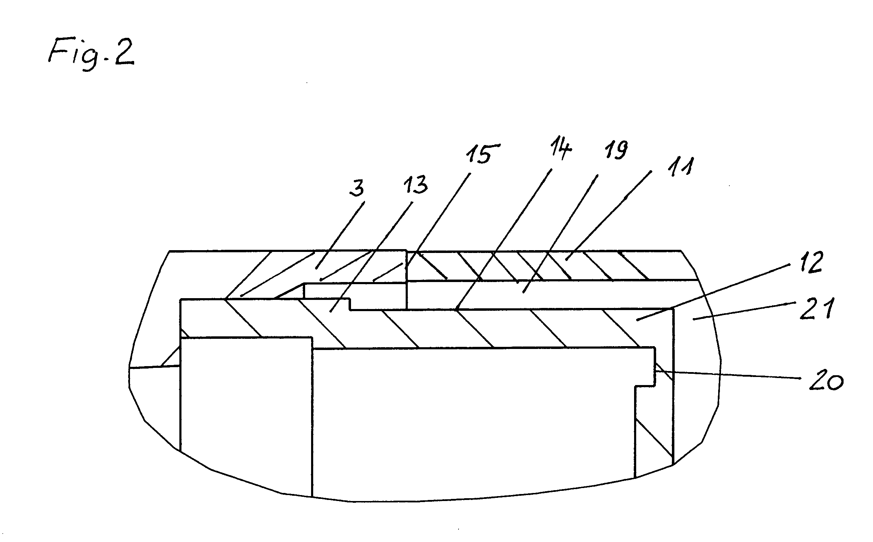

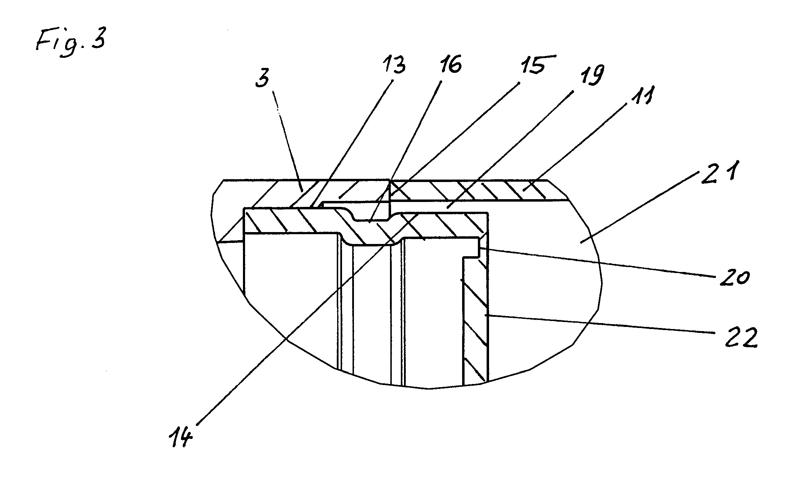

Die Ausbildung der Verschlussdeckel 12; 22 und deren Dichtungsanordnungen zum Gelenkaußenteil 3 des Gleichlaufgelenkes sind in vergrößerter Darstellung in den Einzelheiten A; B gemäß der Figuren 2 und 3 dargestellt.
So zeigt die Figur 2, dass der Verschlussdeckel 12 in seinem äußeren Umfangsbereich mit einem Pressansatz 13 und einem abgesetzten Teilstück 14 ausgebildet ist. Über den Pressansatz 13 ist der Verschlussdeckel 12 in der Aufnahme 10 vom Gelenkaußenteil 3 form- und kraftschlüssig eingebunden und zwischen dem abgesetzten Teilstück 14 des Verschlussdeckels 12 und der Aufnahme 10 ist ein Luftspalt 19 vorhanden.
Wie auch in den Figuren 1 und 2 gezeigt, ist der Pressansatz 13 mit einem kleineren Längenmaß gegenüber der Aufnahme 10 des Gelenkaußenteiles 3 ausgebildet.
Der Anschluss des Rohres 11 oder auch der Anschluss einer Hohlwelle zum Gelenkaußenteil 3 erfolgt durch einen Schweißvorgang, dargestellt als Schweißstelle 15.
Durch den Luftspalt 19 zwischen der Aufnahme 10 vom Gelenkaußenteil 3 und dem abgesetzten Teilstück 14 des Verschlussdeckels 12 wird gewährleistet, dass sich die Schweißnaht durch die sich ausbildenden Schweißwülste 17; 18 an der Schweißstelle 15 ungehindert ausbilden kann.
Als Schweißverfahren findet vorteilhafterweise ein Reibschweißen oder Magnetarcschweißen Anwendung, welches sich fertigungstechnisch gut in den Produktionsablauf eingliedern lässt. Dieses Schweißverfahren gewährleistet eine festigkeitsmäßige Verbindung zwischen den zu schweißenden Teilen und durch die geschaffene Dichtungsanordnung ist eine exakte Abdichtung des Gelenkaußenteiles 3 zum Rohrinnenraum 21 gegeben, die form- und kraftschlüssige Verbindung zwischen dem Verschlussdeckel 12 und dem Gelenkaußenteil 3 wird über die Schweißnaht der Schweißstelle 15 gesichert.

Wie bereits oben beschrieben, wird in einer weiteren Ausgestaltung der Erfindung die Dichtanordnung und Dichtausbildung zum Abdichten des Gelenkaußenteiles 3 gegenüber dem Rohrinnenraum 21 über einen Verschlussdeckel 22 realisiert, welcher gleichfalls mit einem Pressansatz 13 und einem abgesetzten Teilstück 14 ausgebildet ist, aber dieser bei Ausgestaltung im abgesetzten Teilstück 14 vom Deckel 22 eine umlaufende Nut 16 vorgesehen ist.

Ferner ist dieser Verschlussdeckel 22 im äußeren Bereich mit einer Sollbruchstelle 20 ausgebildet, welche gewährleistet, dass sich in einem Crashfall das Gleichlaufgelenk 1 teleskopieren kann. Dies bedeutet, beim Auftreten einer übergroßen Axialkraft auf das Gleichlaufgelenk 1 wird die Sollbruchstelle 20 "aktiviert", der Verschlussdeckel 22 wird in diesem Bereich zerstört und somit ist das Teleskopieren der einzelnen Funktionselemente des Gleichlaufgelenkes 1 in den Rohrinnenraum 21 möglich.

Auch der Verschlussdeckel 12 kann gleichfalls mit einer Sollbruchstelle 20 ausgebildet sein, wenn dies unter Beachtung der vorherrschenden Bedingungen erforderlich oder von Vorteil ist. Die Ausbildungen des Pressansatzes 13 und des abgesetzten Teilstückes 14 vom Verschlussdeckel 22 entsprechen in ihrer Form und in ihren Abmaßen denen des Verschlussdeckels 12. Die im Verschlussdeckel 22 vorgesehene umlaufende Nut 16 ist so im abgesetzten Teilstück 14 vorgesehen, dass diese sich unterhalb der Schweißstelle 15 befindet. Das schweißtechnische Verbinden des Rohres 11 zum Gelenkaußenteil 3 erfolgt an der Schweißstelle 15 gleichfalls mittels einer Reibschweißung oder einer Magnetarcschweißung und infolge der unterhalb der Schweißstelle 15 vorgesehenen umlaufenden Nut 16 wird gewährleistet, dass sich die innere Schweißwulst 17 in der Nut 16 ausbilden kann und so über die Schweißwulst 17 eine zusätzliche formschlüssige Arretierung und Befestigung des Verschlussdeckels 22 zum Gelenkaußenteil 3 gegeben ist.

## Patentansprüche

1. Dichtungsanordnung für Gleichlaufgelenke zum Abdichten des Gelenkaußenteiles (3) zu einem Rohr oder einer Hohlwelle (11), welche mit dem Gelenkaußenteil (3) verbunden ist, und wobei das Gelenkaußenteil (3) auf der gegenüberliegenden Seite mit einem abdichtenden Rollbalg verbindbar ist, **dadurch gekennzeichnet, dass**
ein Dichtelement als ein Verschlussdeckel (12; 22) mit an seinem äußeren Umfang vorgesehenem Pressansatz (13) und abgesetztem Teilstück (14) ausgebildet ist, eine zylindrische oder gestülpte Form besitzt und über den Pressansatz (13) sowie durch eine Sekundärschweißnaht einer das Gelenkaußenteil (3) mit einem Rohr (11) verbundenen Reibschweißung oder Magnetarcschweißung form- und kraftschlüssig im Gelenkaußenteil (3) angeordnet ist, wobei der Verschlussdeckel (22) im abgesetzten Teilstück (14) mit einer umlaufenden Nut (16) sowie mit Sollbruchstellen (20) ausgebildet ist, wobei eine durch die Sekundärschweißnaht herausgebildete Schweißwulst (17) in der umlaufenden Nut (16) vom Verschlussdeckel (22) ausgebildet ist und seitlich durch die Seitenflächen der Nut (16) begrenzt wird.

2. Dichtungsanordnung nach Anspruch 1, **dadurch gekennzeichnet, dass**
die Sekundärschweißnaht im Bereich der Schweißnahtstelle (15) oberhalb und unterhalb der Schweißnaht Schweißwülste (17; 18) herausbildet.

3. Dichtungsanordnung nach den Ansprüchen 1 und 2, **dadurch gekennzeichnet, dass**
das abgesetzte Teilstück (14) vom Verschlussdeckel (12; 22) im Bereich von 0 bis 10 mm in seinem Durchmesser gegenüber dem Außendurchmesser des Pressansatzes (13) kleiner ausgebildet ist.

4. Dichtungsanordnung nach den Ansprüchen 1 bis 3, **dadurch gekennzeichnet, dass**
durch die form- und kraftschlüssige Einbindung der Verschlussdeckel (12; 22) zum Gelenkaußenteil (3) unter Ausschluss von zusätzlichen Dichtelementen sowohl eine funktionssichere festigkeitsmäßige Verbindung als auch dichtende Verbindung erzielt wird.

## Claims

1. Sealing arrangement for homokinetic joints for sealing the joint outer part (3) to a pipe or a hollow shaft (11) that is connected with the joint outer part (3), and whereby the joint outer part (3) on the opposite side can be connected with a sealing rolled bellows, **characterised in that**
a sealing element is configured as a closure lid (12; 22) with a pressed projection (13) and set-back partial piece (14) on its outer circumference, and has a cylindrical or turned over shape, and is disposed by the pressed projection (13) as well as through a secondary weld seam of a friction weld or magnetic arc weld connecting the joint outer part (3) with a pipe (11) as a shape and force fit in the joint outer part (3), whereby the closure lid (22) has a circumferential groove (16) as well as planned breakage points (20) in the set-back partial piece (14), whereby a weld bead (17) formed by the secondary weld seam is arranged in the circumferential groove (16) of the closure lid (22) and is delimited by the side faces of the groove (16).

2. Sealing arrangement in accordance with claim 1, **characterised in that**
the secondary weld seam in the area of the weld seam position (15) above and below the weld seam forms weld beads (17; 18).

3. Sealing arrangement in accordance with claims 1 and 2, **characterised in that**
the set-back partial piece (14) of the closure lid (12; 22) is smaller in the range of 0 to 10 mm in its diameter compared with the outer diameter of the pressed projection (13).

4. Sealing arrangement in accordance with claims 1 to 3 **characterised in that**
the shape and force fit connection of the closure lids (12; 22) to the joint outer part (3) creates a reliably functioning, adequately strong connection as well as a sealing connection with the exclusion of additional sealing elements.

## Revendications

1. Dispositif d'étanchéité pour joints homocinétiques, destiné à étanchéifier la partie extérieure du joint (3) pour un tube ou un arbre creux (11) relié à la partie extérieure du joint (3), la partie extérieure du joint (3) étant assemblable avec un soufflet étanche sur le côté opposé, **caractérisé par le fait**
**qu'**un élément d'étanchéité est conçu comme un couvercle de fermeture (12; 22) avec un embout de pressage prévu sur son pourtour extérieur (13) et une section partielle décentrée (14), qu'il possède une forme cylindrique ou évasée et qu'il est disposé par force et par blocage dans la partie extérieure du joint (3) par le biais de l'embout de pressage (13) et d'une soudure secondaire d'une soudure par friction ou à l'arc magnétique reliant la partie extérieure du joint (3) à un tube (11), le couvercle de fermeture (22) étant conçu dans la section partielle décentrée (14) avec une rainure périphérique (16) ainsi qu'avec des points de rupture théoriques (20), un bourrelet de soudage formé par la soudure secondaire (17) étant constitué dans la rainure périphérique (16) du couvercle de fermeture (22) et limité sur le côté par les surfaces latérales de la rainure (16).

2. Dispositif d'étanchéité conformément à la revendication n°1, **caractérisé par le fait que**
la soudure secondaire dans la zone de la soudure (15) forme des bourrelets de soudage (17; 18) au-dessus et au-dessous de la soudure.

3. Dispositif d'étanchéité conformément aux revendications n°1 et n°2, **caractérisé par le fait que**
la section partielle décentrée (14) du couvercle de fermeture (12; 22) est plus petite dans son diamètre par rapport au diamètre extérieur de l'embout de pressage (13) dans la zone de 0 à 10 mm.

4. Dispositif d'étanchéité conformément aux revendications n°1 à n°3, **caractérisé par le fait que**,
par l'intégration par force et par blocage du couvercle de fermeture (12; 22) vers la partie extérieure du joint (3), un assemblage résistant, assurant un bon fonctionnement, et un assemblage étanche sont obtenus en excluant des éléments d'étanchéité supplémentaires.
